# EUROPEAN PATENT APPLICATION

(11) **EP 4 819 589 A1**
(43) Date of publication of application: **07.10.2026**
(21) Application number: 26154561.0
(22) Date of filing: 27.01.2026
(51) Int. Cl.: H04M 1/02, G06F 1/16

(54) **ELECTRONIC APPARATUS**

(30) Priority: 31.03.2025 JP 2025059370
(71) Applicant: Lenovo Japan LLC, Tokyo 101-0021 (JP)
(72) Inventor: LIU, Yalu, Nishi-ku 3-6-1-21F (JP); SANO, Tetsuya, Nishi-ku 3-6-1-21F (JP); YAMAUCHI, Takehito, Nishi-ku 3-6-1-21F (JP); YAMADA, Sakurako, Nishi-ku 3-6-1-21F (JP); TAKAHASHI, Hinano, Nishi-ku 3-6-1-21F (JP)
(74) Representative: Openshaw & Co.

(57) **Abstract**

The present invention provides an electronic apparatus capable of stably supporting a display while ensuring the quality of appearance. The electronic apparatus includes a first frame member having a first surface and a first end surface, a second frame member having a second surface and a second end surface, a hinge which connects the first frame member and the second frame member so as to be rotatable relatively between a first posture in which the first surface and the second surface are arranged in an overlapping direction, and a second posture in which the first end surface and the second end surface are in contact with or close to each other and the first surface and the second surface are arranged side by side on the left and right, and a display. The hinge has a base portion located on the rear surface sides of the first frame member and the second frame member and arranged so as to straddle a boundary between the first end surface and the second end surface which are in contact with or close to each other in the second posture. A surface of the base portion is provided with a recessed portion extending along the longitudinal direction of each of the first end surface and the second end surface.

## Description

### BACKGROUND OF THE INVENTION

### Field of the Invention

The present invention relates to an electronic apparatus having a plurality of chassis connected by a hinge.

### Description of the Related Art

Recently, an electronic apparatus such as a PC, a smartphone, or the like having a touch panel type liquid display and no physical keyboard has been rapidly widespread. While it is desirable for the display of such an electronic apparatus to be large when in use, it is desirable that the display can be made smaller when not in use. Therefore, there has been proposed an electronic apparatus which uses a flexible display such as an organic EL (Electro Luminescence) to make it possible to bend not only chassis but also the display (refer to, for example, Japanese Unexamined Patent Application Publication No. 2022-166990 and Japanese Patent No. 6513732).

### SUMMARY OF THE INVENTION

It is desirable that the rear surface of such a flexible display as described above is supported by a surface having a high degree of flatness with few steps in a state in which the display is opened to 180 degrees. This is because, for example, when a pen or fingertip picks up the step during touch operation, the operation feeling is reduced. In the configuration of Japanese Unexamined Patent Application Publication No. 2022-166990, a wide gap is formed between end surfaces of left and right plates supporting the display, and this gap is filled with a hinge. This is because when the end surfaces of the left and right plates are arranged so that they butt against each other, there is a risk that the end surfaces of the plates will interfere with the hinge when the plates are rotated. Therefore, in the case of the present configuration, the hinge is configured to support the rear surface of a bent region of the display, thereby making it difficult to eliminate the step.

On the other hand, in the configuration of Japanese Patent No. 6513732, the hinge is arranged on the outside (below the bezel) where it does not overlap with the left and right plates. Therefore, the above-described problems do not occur. However, in the present configuration, the width of the bezel surrounding the periphery of the display has increased, and therefore, the quality of appearance of the electronic apparatus has decreased.

The present invention has been made in consideration of the problems in the prior art described above. An object of the present invention is to provide an electronic apparatus capable of stably supporting a display while ensuring the quality of appearance.

An electronic apparatus according to a first aspect of the present invention includes a first frame member having a flat first surface and a first end surface provided at one edge portion of the first surface, a second frame member having a flat second surface and a second end surface provided at one edge portion of the second surface and adjacent to the first end surface, a hinge which connects the first frame member and the second frame member so as to be rotatable relatively between a first posture in which the first surface and the second surface are arranged in an overlapping direction, and a second posture in which the first end surface and the second end surface are in contact with or close to each other and the first surface and the second surface are arranged side by side, and a display having a bent region which is provided between the first surface and the second surface and bent as the first frame member and the second frame member rotate relative to each other. The hinge has a base portion located on rear surface sides of the first frame member and the second frame member and arranged to straddle a boundary between the first end surface and the second end surface which are in contact with or close to each other in the second posture. A surface of the base portion includes a recessed portion extending along a longitudinal direction of the first end surface and the second end surface.

According to the above-described aspect of present invention, it is possible to stably support a display while ensuring the quality of appearance.

### BRIEF DESCRIPTION OF THE DRAWINGS

FIG. 1 is a perspective view schematically illustrating a state in which an electronic apparatus according to one embodiment is closed and in a 0-degree posture;
FIG. 2 is a plan view schematically illustrating a state in which the electronic apparatus illustrated in FIG. 1 is opened and in a 180-degree posture;
FIG. 3 is a schematic plan view of the electronic apparatus illustrated in FIG. 2 with a part thereof cut away to expose hinges;
FIG. 4 is a schematic cross-sectional side view of the hinge in a 180-degree posture and the electronic apparatus at a peripheral portion of the hinge;
FIG. 5 is a view illustrating the electronic apparatus illustrated in FIG. 4 in a 90-degree posture;
FIG. 6 is a view illustrating the electronic apparatus illustrated in FIG. 5 in a 0-degree posture;
FIG. 7 is a perspective view of the hinge as seen obliquely from above;
FIG. 8 is a perspective view of the hinge with brackets illustrated in FIG. 7 omitted;
FIG. 9 is a partly enlarged view of the hinge in the 180-degree posture, in which FIG. 9(A) is a side view, FIG. 9(B) is a plan view, and FIG. 9(C) is a bottom view;
FIG. 10 is a partly enlarged view of the hinge in a 100-degree posture, in which FIG. 10(A) is a side view, FIG. 10(B) is a plan view, and FIG. 10(C) is a bottom view; and
FIG. 11 is a partly enlarged view of the hinge in a 0-degree posture, in which FIG. 11(A) is a side view, FIG. 11(B) is a plan view, and FIG. 11(C) is a bottom view.

### DETAILED DESCRIPTION OF THE INVENTION

Hereinafter, preferred embodiments of an electronic apparatus according to the present invention will be given and described in detail with reference to the accompanying drawings.

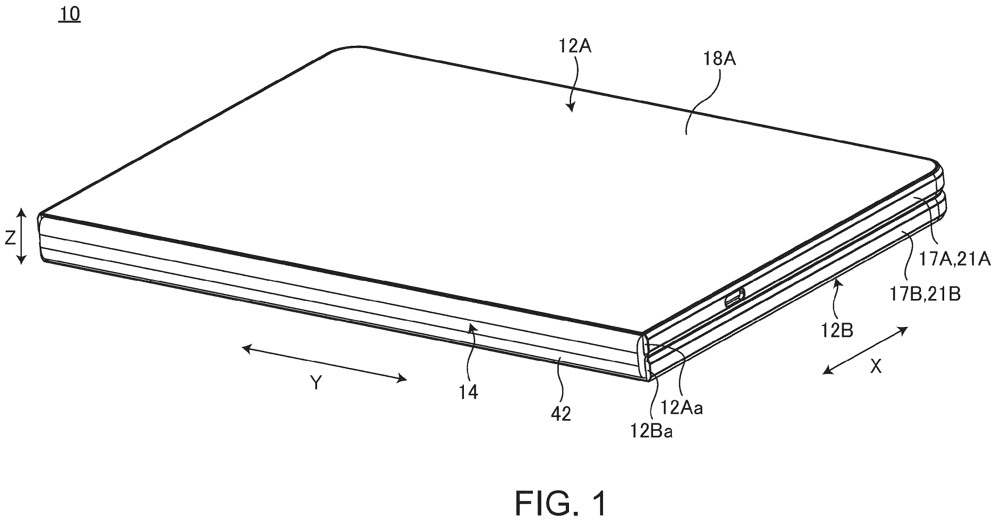

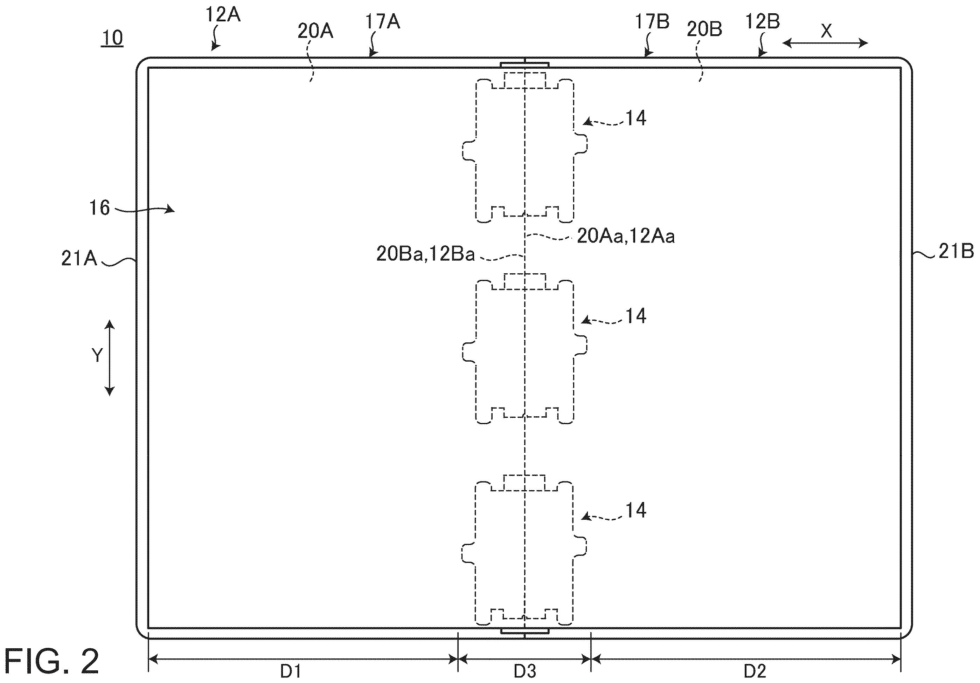

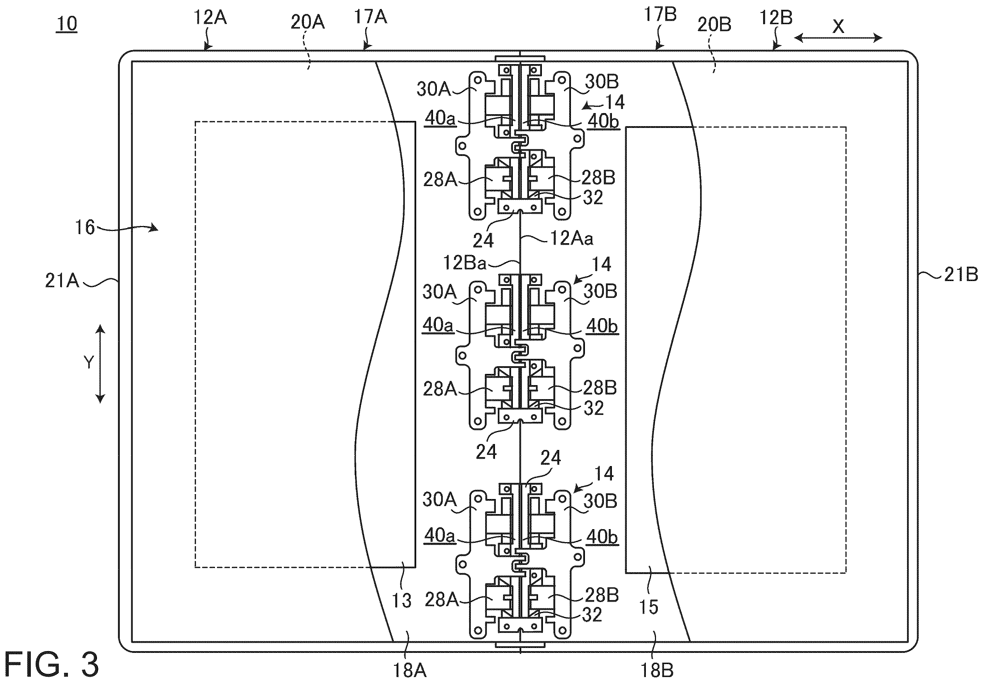

FIG. 1 is a perspective view schematically illustrating a state in which an electronic apparatus 10 according to one embodiment is closed and in a 0-degree posture. FIG. 2 is a plan view schematically illustrating a state in which the electronic apparatus 10 illustrated in FIG. 1 is opened and in a 180-degree posture. FIG. 3 is a schematic plan view of the electronic apparatus 10 illustrated in FIG. 2 with a part thereof cut away to expose a hinge 14.

As illustrated in FIGS. 1 to 3, the electronic apparatus 10 includes a first chassis 12A, a second chassis 12B, a hinge 14, and a display 16. The electronic apparatus 10 according to the present embodiment is exemplified as a tablet PC or a laptop PC which can be folded like a book. The electronic apparatus 10 may be a smartphone, a portable game machine, or the like.

The chassis 12A and 12B are arranged adjacent to each other. Each of the chassis 12A and 12B can be equipped with a motherboard 13 mounted with a CPU or the like, and a battery device 15 which serves as a power supply for the electronic apparatus 10 (refer to FIG. 3). Each of the chassis 12A and 12B can further be equipped with various electronic components such as a memory device, an antenna element, and a communication module.

The first chassis 12A may include a frame member 17A and a cover member 18A. The frame member 17A has, for example, a plate portion 20A and a standing wall portion 21A. The plate portion 20A is a thin plate-shaped member which supports a part of a rear surface 16a of the display 16. The standing wall portion 21A stands upright on three outer peripheral sides of the plate portion 20A other than an adjacent edge portion 12Aa adjacent to the second chassis 12B. The standing wall portion 21A surrounds the three outer peripheral sides of the plate portion 20A. The cover member 18A is a plate-shaped member which closes a bottom surface opening of a frame member 17A.

The second chassis 12B may have a substantially bilateral symmetrical structure with the first chassis 12A. The second chassis 12B may include the frame member 17B and a cover member 18B. The frame member 17B has, for example, a plate portion 20B and a standing wall portion 21B. The plate portion 20B is a thin plate-shaped member which supports a part of the rear surface of the display 16. The standing wall portion 21B stands upright on three outer peripheral sides of the plate portion 20B other than an adjacent edge portion 12Ba adjacent to the second chassis 12B. The standing wall portion 21B surrounds the three outer peripheral sides of the plate portion 20B. The cover member 18B is a plate-shaped member which closes a bottom surface opening of the frame member 17B.

Each of the members 17A, 17B, 18A, and 18B may be constituted of, for example, a metal member such as stainless steel, magnesium, or aluminum, or a fiber-reinforced resin plate containing a reinforcing fiber such as a carbon fiber.

The hinge 14 connects the chassis 12A and 12B so that they can rotate relatively between the 0-degree posture and the 180-degree posture. The hinge 14 also functions as a spine which hides a gap between the adjacent edge portions 12Aa and 12Ba formed in the 0-degree posture illustrated in FIG. 1. The display 16 can be constituted of a touch-operable paper-like flexible display formed of, for example, an organic EL.

Hereinafter, the electronic apparatus 10 will be described by referring to the arrangement direction of the chassis 12A and 12B as an X direction, the direction along the adjacent edge portions 12Aa and 12Ba perpendicular to the X direction as a Y direction, and the thickness direction of the chassis 12A and 12B as a Z direction. Further, the angular posture between the chassis 12A and 12B will be described by referring to a state in which they overlap each other in a surface direction as the 0-degree posture (refer to FIG. 1), and a state in which they are arranged side by side on the left and right with each other as the 180-degree posture (refer to FIG. 2). The posture between 0 degrees and 180 degrees can be designated by appropriate angular increments, and for example, a state in which the surface directions of the chassis 12A and 12B are perpendicular to each other becomes a 90-degree posture. These angles are for the convenience of description, and it also naturally occurs that in an actual product, the angle positions may deviate slightly from the accurate angle positions indicated by angle numbers.

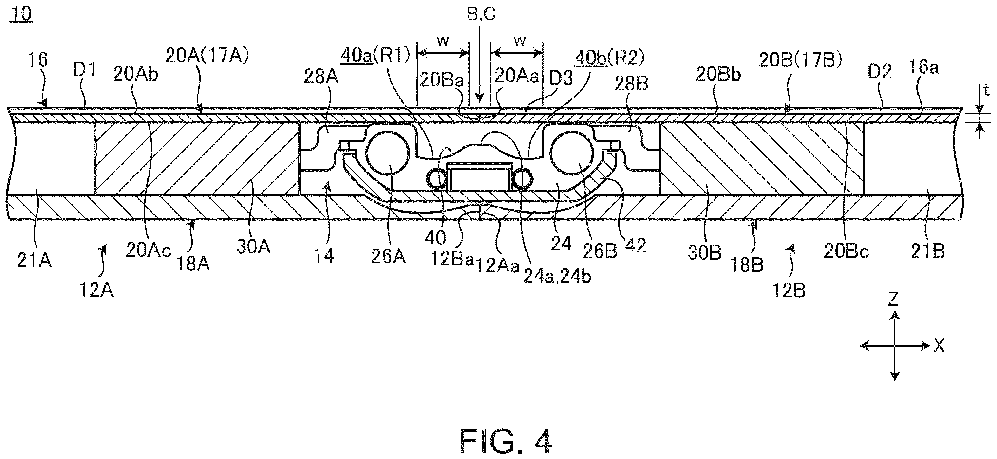

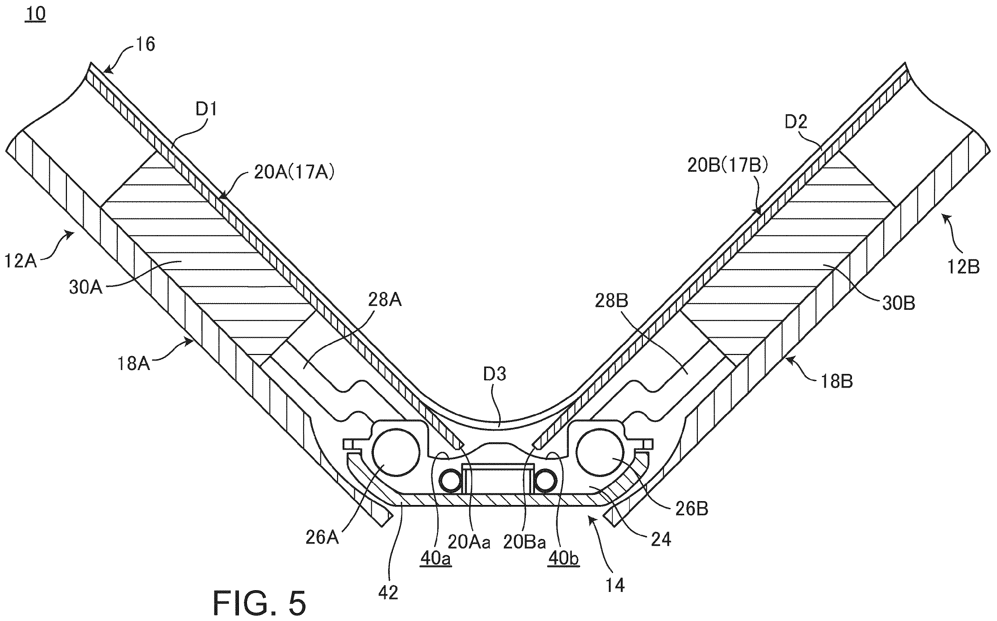

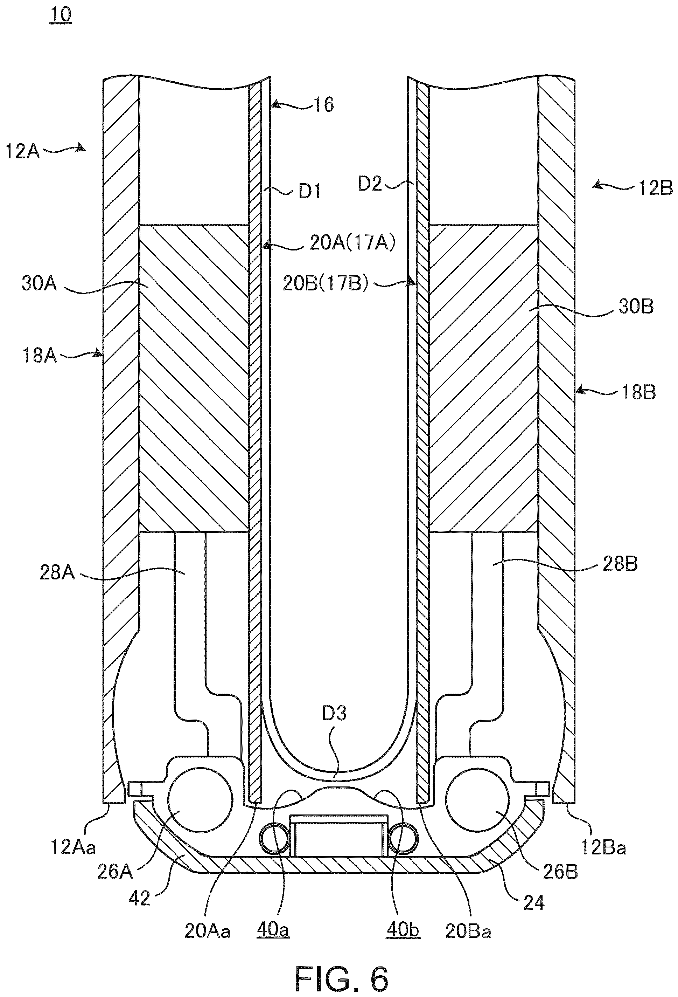

FIG. 4 is a schematic cross-sectional side view of the hinge 14 in the 180-degree posture and the electronic apparatus 10 at a peripheral portion of the hinge. FIG. 5 is a view illustrating the electronic apparatus 10 illustrated in FIG. 4 in the 90-degree posture. FIG. 6 is a view illustrating the electronic apparatus 10 illustrated in FIG. 5 in the 0-degree posture.

In the 0-degree posture illustrated in FIGS. 1 and 6, the chassis 12A and 12B are in a state of being folded in two. In the 0-degree posture, the display 16 is arranged so that a region R1 (first display portion D1) on the first chassis 12A side illustrated in FIG. 2 and a region R2 (second display portion D2) on the second chassis 12B side face each other. At this time, a bent region D3 which is a boundary region between the display portions D1 and D2 is in a state of being bent in an arc shape. That is, in the 0-degree posture, the display 16 is bent in a substantially U-shape in a side view. The bent region D3 is a band-shaped region which straddles in the X direction end surfaces 20Aa and 20Ba of the plate portions 20A and 20B which are in contact in the 180-degree posture, and extend in the Y direction.

In the 180-degree posture illustrated in FIGS. 2 and 4, the chassis 12A and 12B are arranged side by side on the left and right with each other. At this time, in the display 16, the display portions D1 and D2 and the bent region D3 are arranged side by side on the XY plane and form a single flat shape as a whole.

In the display 16, the first display portion D1 is fixed relatively to the first chassis 12A, and the second display portion D2 is fixed relatively to the second chassis 12B. In the display 16, the rear surface 16a of the first display portion D1 is fixed to a surface 20Ab of the plate portion 20A, the rear surface 16a of the second display portion D2 is fixed to a surface 20Bb of the plate portion 20B. The bent region D3 is in a state of being movable relative to the chassis 12A and 12B.

As illustrated in FIG. 2 and FIGS. 4 to 6, in the 180-degree posture, the plate portions 20A and 20B are configured so that the end surfaces 20Aa and 20Ba thereof on the sides of the edge portions 12Aa and 12Ba adjacent to each other abut against each other. At this time, it is preferable that the end surfaces 20Aa and 20Ba come into contact with each other. The end surfaces 20Aa and 20Ba may be adjacent to each other with a minute gap of, for example, 1 mm or less in between. Thus, it is possible to suppress the influence of a step caused by the gap between the end surfaces 20Aa and 20Ba on the display 16.

The surfaces 20Ab and 20Bb of the plate portions 20A and 20B are preferably formed as flat surfaces having a high degree of flatness. This is because there is a concern that when the surfaces 20Ab and 20Bb have irregularities or the like, it may affect the display quality, touch operability, and the like of the display 16. It should be noted that "the surfaces 20Ab and 20Bb are flat surfaces" does not mean that they are completely free of minute irregularities, holes, and the like. Furthermore, it is not intended to completely exclude that, for example, the surfaces 20Ab and 20Bb have minimum irregularities and holes, and the like necessary for manufacturing tolerances and connection of the frame members 17A and 17B to other members, etc.

The bent region D3 of the display 16 is movable relative to the chassis 12A and 12B. In the 180-degree posture, the rear surface 16a of the bent region D3 is arranged so as to straddle the end surfaces 20Aa and 20Ba abutting each other in the X direction, and is supported by the surfaces 20Ab and 20Bb (refer to FIG. 4). In the 0-degree posture, the bent region D3 is bent in an arch shape, and most of it is separated from the hinge 14 (refer to FIG. 6).

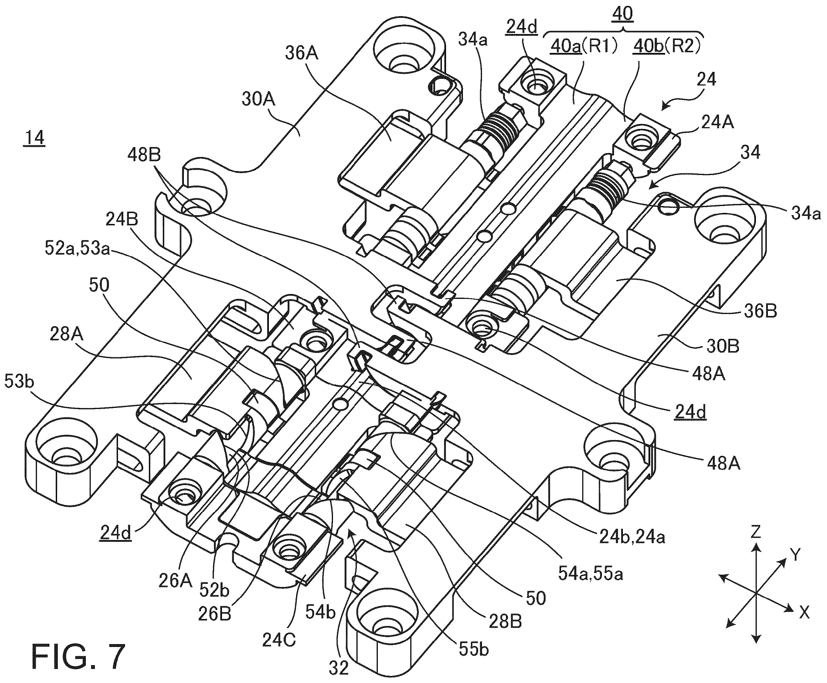

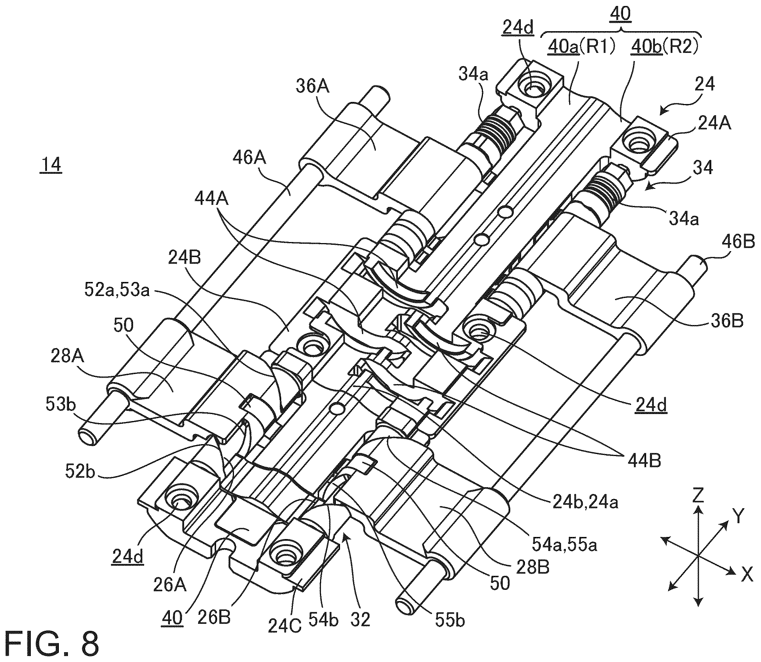

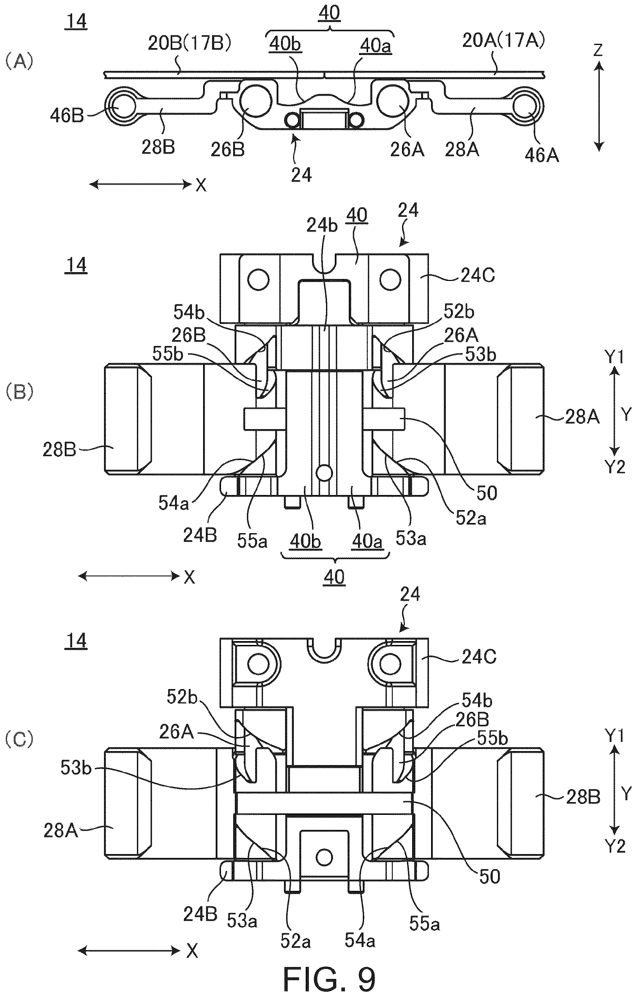

Next, a configuration example of the hinge 14 will be described. FIG. 7 is a perspective view of the hinge 14 as seen obliquely from above. FIG. 8 is a perspective view of the hinge 14 with brackets 30A and 30B illustrated in FIG. 7 omitted. FIGS. 9, 10, and 11 are partly enlarged views of the hinge 14 in the 180-degree posture, the 100-degree posture, and the 0-degree posture, respectively. In FIGS. 9 to 11, (A) illustrates a side view, (B) illustrates a plan view, and (C) illustrates a bottom view.

As illustrated in FIGS. 7 and 8, the hinge 14 is a configuration in which a plurality of metal parts are assembled. The hinge 14 is arranged so as to straddle the adjacent edge portions 12Aa and 12Ba of the chassis 12A and 12B (refer to FIGS. 3 and 4). A plurality of the hinges 14 may be provided along the adjacent edge portions 12Aa and 12Ba. FIGS. 2 and 3 illustrate a configuration in which three hinges 14 are installed along the Y direction. In the 180-degree posture illustrated in FIGS. 2 to 4, the hinges 14 are arranged between the plate portions 20A and 20B and the cover members 18A and 18B. In the plan view illustrated in FIGS. 2 and 3, the hinges 14 are located in positions hidden under the plate portions 20A and 20B.

As illustrated in FIGS. 7 to 9, the hinge 14 may have a base portion 24, a pair of shafts 26A and 26B, and a pair of link members 28A and 28B. The hinge 14 may further include a pair of brackets 30A and 30B, a synchronous mechanism 32, a torque mechanism 34, and a pair of sub-link members 36A and 36B.

The base portion 24 is a central part of the hinge 14. The base portion 24 is arranged on the sides of rear surfaces 20Ac and 20Bc of the plate portions 20A and 20B, and is arranged so as to straddle a boundary B between the end surfaces 20Aa and 20Ba in a plan view. That is, in the 180-degree posture, the base portion 24 is located below the plate portions 20A and 20B and straddles the adjacent edge portions 12Aa and 12Ba. The base portion 24 is formed in a substantially band shape in a plan view, and extends along the extending direction of the boundary B (Y direction). As illustrated in FIGS. 7 and 8, the base portion 24 in the present embodiment is configured by a plurality of components in the Y direction, but may be formed entirely from a single component.

A recessed portion 40 extending in the Y direction is formed on a surface 24a of the base portion 24 over the entire length thereof. The surface 24a is an upper surface which faces the sides of the rear surfaces 20Ac and 20Bc. Preferably, the recessed portion 40 is arranged so as to straddle the boundary B in a plan view, and the width center C in the X direction is positioned directly below the boundary B (refer to FIG. 4). The recessed portion 40 is a relief portion for preventing the end surfaces 20Aa and 20Ba of the plate portions 20A and 20B from interfering with the base portion 24 when the chassis 12A and 12B are rotated from 180 degrees to 0 degrees.

The recessed portion 40 may include a first region R1 and a second region R2. The first region R1 is a portion located closer to the frame member 17A (first chassis 12A) than the width center C in the X direction. The second region R2 is a portion located closer to the frame member 17B (second chassis 12B) than the width center C in the X direction. As illustrated in FIG. 4, the width W of the first region R1 is greater than the thickness t of the end surface 20Aa and is wide. The width W of the second region R2 is greater than the thickness t of the end surface 20Ba and is wide. This allows the first region R1 to smoothly escape from the end surface 20Aa, and the second region R2 to smoothly escape from the end surface 20Ba (refer to FIGS. 5 and 6). In FIG. 4, the widths W of the regions R1 and R2 are made identical, but they may be different in width. Similarly, in FIG. 4, the thickness t of the end surfaces 20Aa and 20Ba is made identical, but they may be different in thickness.

The base portion 24 may have a ridge portion 24b at the width center C of the surface 24a. The ridge portion 24b is a mountain-shaped protruding portion which protrudes from the surface 24a toward the plate portions 20A and 20B, and extends in the Y direction. Since the recessed portion 40 has the ridge portion 24b in the center, the regions R1 and R2 are partitioned into a pair of parallelized recessed portions 40a and 40b. One recessed portion 40a is a groove located on the frame member 17A side of the ridge portion 24b in the X direction. The other recessed portion 40b is a groove located on the frame member 17B side of the ridge portion 24b in the X direction. The recessed portions 40a and 40b may have such an arc shape as to conform to the end surfaces 20Aa and 20Ba which describe a turning locus when the chassis 12A and 12B are rotated.

A part of the recessed portion 40 may be configured so as not to be partitioned into the recessed portions 40a and 40b. For example, the recessed portion 40 illustrated in FIGS. 7 and 8 does not have the ridge portion 24b in the flange portion 24C at the lower left in the drawing, and is not divided into the recessed portions 40a and 40b. However, in consideration of the strength of the base portion 24 and the sliding distance of guide portions 48A and 48B to be described later, it is preferable that the recessed portion 40 has the ridge portion 24b over as much of its entire length as possible.

As illustrated in FIGS. 7 and 8, the base portion 24 may have a plurality of flange portions 24A to 24C arranged with spaces defined therebetween in the longitudinal direction (Y direction). The flange portions 24A to 24C are portions of the base portion 24 in its longitudinal direction, which are enlarged in width in the X direction. The flange portions 24A and 24C are located at both ends of the base portion 24 in the longitudinal direction, and the flange portion 24B is located in the middle of the base portion 24. The flange portions 24A to 24C are portions which support the shafts 26A and 26B. The space between the flange portions 24A and 24B becomes a space for installing the torque mechanism 34. The space between the flange portions 24B and 24C becomes a space for installing the synchronous mechanism 32.

Mounting holes 24d are formed at various locations in the flange portions 24A to 24C. The mounting holes 24d are holes through which screws for fastening a spine part 42 are passed. The spine part 42 is a part which serves as a cosmetic cover for the hinge 14 (refer also to FIG. 1). The spine part 42 has, for example, a substantially semicylindrical shape.

As illustrated in FIG. 8, for example, a pair of guide surfaces 44A and 44A and a pair of guide surfaces 44B and 44B may be formed on the surface 24a of the central flange portion 24B. The guide surface 44A is a recess which is wider in the X direction and deeper in the Z direction than the recessed portion 40a. The guide surface 44A is recessed in an arch shape so as to cross a part of the recessed portion 40a in the longitudinal direction. The guide surface 44B is a recess which is wider in the X direction and deeper in the Z direction than the recessed portion 40b. The guide surface 44B is recessed in an arc shape so as to cross a part of the recessed portion 40b in the longitudinal direction. The guide portions 48A and 48B of the brackets 30A and 30B to be described later come into slidable contact with the guide surfaces 44A and 44B.

As illustrated in FIG. 4 and FIGS. 7 to 9, the shafts 26A and 26B are metal shafts which act as rotational axes for the hinge 14. The shafts 26A and 26B have an axial direction extending along the Y direction and are arranged on the left and right. The shafts 26A and 26B pass through the central flange portion 24B in the Y direction, for example. One end of each of the shafts 26A and 26B is supported by the flange portion 24C, and the other end thereof is in proximity to an end surface of the flange portion 24A.

The shafts 26A and 26B in the present embodiment are fixed to the base portion 24 so as not to be relatively rotatable. One shaft 26A is located on the rear surface 20Ac side of the plate portion 20A which constitutes the frame member 17A. The other shaft 26B is located on the rear surface 20Bc side of the plate portion 20B which constitute the frame member 17B.

As illustrated in FIG. 4 and FIGS. 7 to 9, the link members 28A and 28B are members for connecting the hinge 14 and the frame members 17A and 17B. In the case of the case of the present embodiment, the hinge 14 is connected to the frame members 17A and 17B via the brackets 30A and 30B. For example, cylindrical portions are formed at both ends of the link members 28A and 28B, respectively. One link member 28A has one end supported by the shaft 26A so as to be relatively rotatable, and the other end connected to the bracket 30A so as to be relatively rotatable. The other link member 28B has one end supported by the shaft 26B so as to be relatively rotatable, and the other end connected to the bracket 30B so as to be relatively rotatable.

The shafts 26A and 26B are inserted into the cylindrical portions at one ends of the link members 28A and 28B so as to be capable of relative rotation. Support bars 46A and 46B are inserted into the cylindrical portions at the other ends of the link members 28A and 28B so as to be capable of relative rotation (refer to FIG. 8). The support bar 46A is fixed to the bracket 30A, and the support bar 46B is fixed to the bracket 30B. The brackets 30A and 30B are fixed to the plate portions 20A and 20B respectively. Thus, the other ends of the link members 28A and 28B are connected to the frame members 17A and 17B so as to be relatively rotatable. The other ends of the link members 28A and 28B may be directly supported by, for example, hook portions or the like provided on the rear surfaces 20Ac and 20Bc of the plate portions 20A and 20B. In this case, the brackets 30A and 30B become unnecessary.

As illustrated in FIGS. 9(B), 10(B), and 11(B), and the like, one ends of the link members 28A and 28B are installed so as to be relatively movable in the axial direction of the shafts 26A and 26B between the flange portions 24B and 24C. That is, the link members 28A and 28B are supported so as to be rotatable and movable relative to the shafts 26A and 26B. The other ends of the link members 28A and 28B are also relatively movable in the axial direction of the support bars 46A and 46B. That is, the link members 28A and 28B are supported so as to be rotatable and movable even relative to the brackets 30A and 30B. On the other hand, the positional relationship between the shafts 26A and 26B and the brackets 30A and 30B with each other in the Y direction remains unchanged. That is, the positional relationship between the base portion 24 and the frame members 17A and 17B with each other in the Y direction does not change either.

As illustrated in FIGS. 4, 7, and 8, the brackets 30A and 30B are parts for connecting the hinge 14 to the frame members 17A and 17B. One bracket 30A can be screwed to the rear surface 20Ac of the plate portion 20A. The other bracket 30B can be screwed to the rear surface 20Bc of the plate portion 20B. The cover members 18A and 18B may further be screwed to the brackets 30A and 30B, respectively.

The bracket 30A may have a pair of claw-shaped guide portions 48A and 48A which protrude toward the base portion 24 in the X direction. The bracket 30B may have a pair of claw-shaped guide portions 48B and 48B which protrude toward the base portion 24 in the X direction. The guide portions 48A and 48B extend above the surface 24a of the base portion 24 and are arranged alternately along the Y direction. The guide portions 48A and 48B have arc-shaped end surfaces which are slidable along the guide surfaces 44A and 44B formed on the base portion 24, respectively. When the chassis 12A and 12B are rotated, the guide portions 48A and 48B slide on the guide surfaces 44A and 44B and guide the rotational loci of the frame members 17A and 17B relative to the base portion 24.

As illustrated in FIGS. 7 to 11, the synchronous mechanism 32 is a mechanism part for synchronizing the relative rotation of the left and right chassis 12A and 12B with respect to the hinge 14. The synchronous mechanism 32 can synchronize the relative rotation of the link member 28A with respect to the shaft 26A and the relative rotation of the link member 28B with respect to the shaft 26B.

The synchronous mechanism 32 may include a connecting member 50, a pair of cam portions 52a and 52b, a pair of receiving portions 53a and 53b, a pair of cam portions 54a and 54b, and a pair of receiving portions 55a and 55b.

The connecting member 50 is, for example, an eyeglass-shaped member having cylindrical portions at both ends thereof. The connecting member 50 is provided so as to straddle between the left and right shafts 26A and 26B. The shafts 26A and 26B are respectively inserted into the cylindrical portions at both ends of the connecting member 50 so as to be relatively movable in the axial direction. Further, the connecting member 50 is provided so as to straddle even the left and right link members 28A and 28B. Both ends of the connecting member 50 are in contact with one ends of the link members 28A and 28B so as to be immovable relatively in the Y direction. This allows the connecting member 50 to synchronize the movements of the link members 28A and 28B along the axial direction of the shafts 26A and 26B. That is, the link members 28A and 28B are connected to each other by the connecting member 50 and move integrally in the Y direction.

The cam portions 52a and 52b are formed on the flange portions 24B and 24C and arranged to face each other. The cam portions 52a and 52b are arranged so as to straddle one end of the link member 28A between them. The cam portions 52a and 52b are preferably provided on an outer peripheral surface of the shaft 26A and have an approximately spiral shape which is inclined in the axial direction along a circumferential direction of the shaft 26A.

The receiving portions 53a and 53b are respectively formed on both side surfaces of one end of the link member 28A. Preferably, the receiving portions 53a and 53b are provided on the outer peripheral surface of the shaft 26A and have an approximately spiral shape which is inclined in the axial direction along the circumferential direction of the shaft 26A. Thus, the receiving portion 53a is in slidable contact with the cam portion 52a. The receiving portion 53b is in slidable contact with the cam portion 52b. The receiving portions 53a and 53b do not have to be spirally shaped as long as they can slide along the cam portions 52a and 52b, and the same also applies for the receiving portions 55a and 55b.

Since the cam portions 54a and 54b are shaped substantially symmetrically to the cam portions 52a and 52b, their detailed description will be omitted. That is, the cam portions 54a and 54b are arranged so as to straddle one end of the link member 28B between them. The cam portions 54a and 54b may have an approximately spiral shape provided on an outer peripheral surface of the shaft 26B.

Since the receiving portions 55a and 55b may be shaped substantially symmetrical to the receiving portions 53a and 53b, their detailed description will be omitted. That is, the receiving portions 55a and 55b are formed on both side surfaces of one end of the link member 28B, respectively, and form an approximately spiral shape on the outer peripheral surface of the shaft 26B. The receiving portion 55a comes into slidable contact with the cam portion 54a. The receiving portion 55b comes into slidable contact with the cam portion 54b.

As illustrated in FIGS. 7 and 8, the torque mechanism 34 is a mechanism part for generating a predetermined rotational torque when the chassis 12A and 12B are rotated by the hinge 14. The torque mechanism 34 includes, for example, a plurality of leaf springs 34a which are fitted onto the shafts 26A and 26B and stacked respectively. The torque mechanism 34 applies an axial compressive force to the stacked leaf springs 34a. The torque mechanism 34 applies a pressing force to the sub-link members 36A and 36B. The torque mechanism 34 applies a predetermined rotational torque to the rotation of the sub-link members 36A and 36B around the axes of the shafts 26A and 26B. Thus, the torque mechanism 34 applies a predetermined rotational torque to the swivel actions of the brackets 30A and 30B around the axes of the shafts 26A and 26B. That is, the torque mechanism 34 can apply a predetermined rotational torque between the chassis 12A and 12B.

As illustrated in FIGS. 7 and 8, the sub-link members 36A and 36B are provided side by side with the link members 28A and 28B and connect the hinge 14 and the frame members 17A and 17B. Both ends of the sub-link members 36A and 36B are formed with cylindrical portions respectively, for example. One sub-link member 36A has one end supported by the shaft 26A so as to be relatively rotatable, and the other end connected to the bracket 30A so as to be relatively rotatable. The other sub-link member 36B has one end supported by the shaft 26B so as to be relatively rotatable, and the other end connected to the bracket 30B so as to be relatively rotatable. The other ends of the link members 28A and 28B and the sub-link members 36A and 36B are respectively supported by the support bars 46A and 46B so as to be relatively rotatable.

One ends of the sub-link members 36A and 36B are arranged between the flange portions 24A and 24B. One ends of the sub-link members 36A and 36B are pressed against the flange portion 24B side under the pressing force from the torque mechanism 34. Consequently, the sub-link members 36A and 36B are rotatable around the axes of the shafts 26A and 26B with a predetermined rotational torque. The rotational torques of the sub-link members 36A and 36B becomes the rotational torque between the chassis 12A and 12B.

The hinge 14 may be configured to generate the rotational torque by a configuration other than the torque mechanism 34 and the sub-link members 36A and 36B. For example, a configuration or the like may be used in which one ends of the link members 28A and 28B are press-fitted onto the shafts 26A and 26B to thereby directly apply the rotational torque to the relative rotation between them.

Next, the operation of the hinge 14 and the positional relationship with the frame members 17A and 17B at that time will be described. Hereinafter, as illustrated in FIGS. 9(B) and 9(C), and the like, the hinge 14 will be described by referring to the flange portion 24C side in the axial direction (Y direction) of the shafts 26A and 26B as a Y1 direction and the flange portion 24B side as a Y2 direction.

As illustrated in FIGS. 4 and 9, in the 180-degree posture, the hinge 14 is arranged at a position hidden on the sides of the rear surfaces 20Ac and 20Bc of the plate portions 20A and 20B which are in contact with each other. The link members 28A and 28B are arranged so that their surface directions extend substantially along the X direction.

As illustrated in FIGS. 9(B) and 9(C), in the 180-degree posture, one end of each of the link members 28A and 28B is at a position where it has moved the most in the Y2 direction. Therefore, in the link members 28A and 28B, the Y2-side receiving portions 53a and 55a are in contact with the Y2-side cam portions 52a and 54a so as to mesh with each other, respectively.

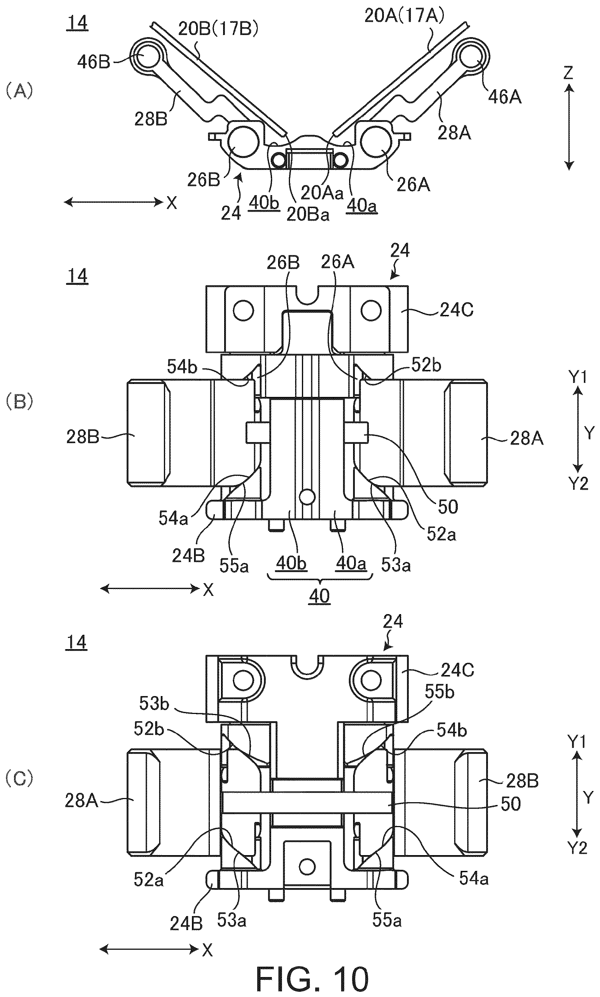

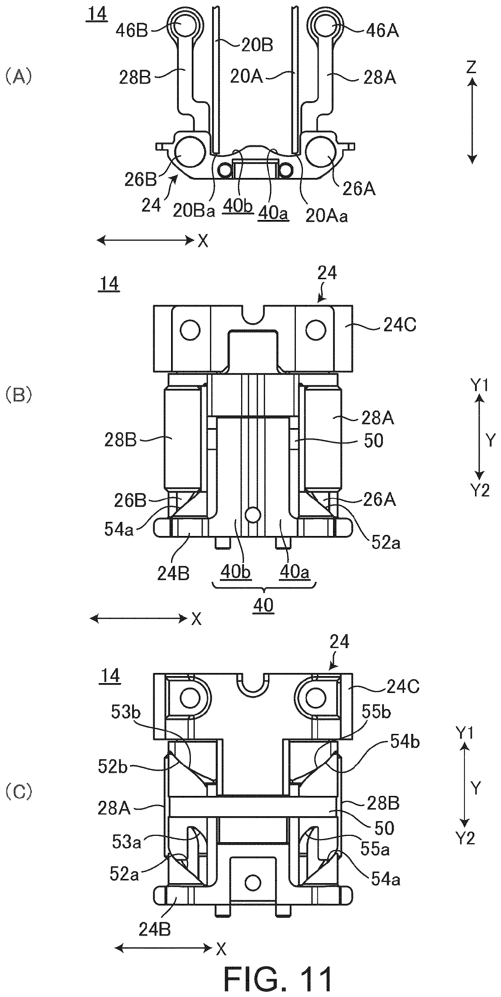

Through the rotational operation from 180 degrees to 0 degrees, for example, a user grasps the chassis 12A and 12B and closes the chassis 12A and 12B in a manner similar to folding an open book. The brackets 30A and 30B are fixed to the frame members 17A and 17B which constitute the chassis 12A and 12B. Therefore, the brackets 30A and 30B rotate around the axes of the shafts 26A and 26B via the link members 28A and 28B (and the sub-link members 36A and 36B) (refer to FIGS. 5 and 6). That is, the link members 28A and 28B rotate around the axes of the shafts 26A and 26B (refer to FIG. 10(A) and FIG. 11(A)).

In doing so, the receiving portion 53a slides on the cam portion 52a, and the link member 28A moves in the Y1 direction. Similarly, the receiving portion 55a slides on the cam portion 54a, and the link member 28B also moves in the Y1 direction. At this time, the left and right link members 28A and 28B are connected by the connecting member 50 and are mutually restricted in their movement in the Y direction. That is, the movements of the link members 28A and 28B in the Y1 direction are synchronized. Therefore, the chassis 12A and 12B are folded while their rotational angles with respect to the respective shafts 26A and 26B are synchronized. For example, in the 100-degree posture illustrated in FIG. 10, the link member 28A is rotated 50 degrees from FIG. 9, and the link member 28B is also rotated 50 degrees from FIG. 9. Thus, the movements of the link members 28A and 28B in the Y1 direction are prevented from becoming inconsistent. As a result, the hinge 14 can suppress the chassis 12A and 12B from rotating jerkily or getting stuck.

As illustrated in FIGS. 6 and 11, in the 0-degree posture, the hinge 14 is at a position where the link members 28A and 28B are rotated by 90 degrees relative to the shafts 26A and 26B, respectively. The electronic apparatus 10 is placed in a direction in which the surface directions of the plate portions 20A and 20B overlap each other, and the bent region D3 of the display 16 becomes a predetermined bent shape.

The rotational operation from 0 degrees to 180 degrees becomes the reverse of the closing operation described above. As illustrated in FIGS. 11(B) and 11(C), in the 0-degree posture, one end of each of the link members 28A and 28B is at a position where it has moved the most in the Y1 direction. Therefore, in the link members 28A and 28B, the Y1-side receiving portions 53b and 55b are in contact with the Y1-side cam portions 52b and 54b so as to mesh with each other, respectively.

When the chassis 12A and 12B are rotated in the opening direction, the receiving portion 53b slides on the cam portion 52b, and the link member 28A moves in the Y2 direction. Similarly, the receiving portion 55b slides on the cam portion 54b, and the link member 28B also moves in the Y2 direction. In this case as well, the left and right link members 28A and 28B operate in synchronization. Therefore, the rotations of the chassis 12A and 12B around the axes of the shafts 26A and 26B are in synchronization.

By the way, in the electronic apparatus 10 of the present embodiment, the end surfaces 20Aa and 20Ba of the left and right plate portions 20A and 20B come into contact with or are close to each other when the electronic apparatus 10 is in the 180-degree posture. Therefore, in the 180-degree posture, the rear surface 16a of the bent region D3 of the display 16 is supported by the flat surfaces 20Ab and 20Bb and is therefore made stable. This makes it difficult for distortion or the like to occur in the display in the bent region D3 of the display 16, and also improves the operability of touch operations.

However, in the 180-degree posture, the hinge 14 is located on the sides of the rear surfaces 20Ac and 20Bc of the plate portions 20A and 20B so as to straddle the boundary B between the end surfaces 20Aa and 20Ba. Therefore, when the chassis 12A and 12B are rotated, the end surfaces 20Aa and 20Ba of the plate portions 20A and 20B may interfere with the base portion 24 of the hinge 14, which may cause the rotation to get stuck or become unsmooth. In this regard, the hinge 14 in the present embodiment has the recessed portion 40 on the surface 24a of the base portion 24. Therefore, as illustrated in FIGS. 4 to 6, it is possible to avoid the end surfaces 20Aa and 20Ba from interfering with the hinge 14 when the chassis 12A and 12B are rotated, and it is possible to ensure a smooth rotational operation.

As described above, in the electronic apparatus 10 of the present embodiment, the hinge 14 connects the frame members 17A and 17B so that they can rotate relatively between the first posture (for example, 0-degree posture) in which the surfaces 20Ab and 20Bb are arranged in the direction in which they overlap, and the second posture (for example, 180-degree posture) in which the end surfaces 20Aa and 20Ba are in contact or close proximity and the surfaces 20Ab and 20Bb are arranged side by side on the left and right. The hinge 14 has the base portion 24 which is located on the sides of the rear surfaces 20Ac and 20Bc of the frame members 17A and 17B and arranged so as to straddle the boundary B between the end surfaces 20Aa and 20Ba in the second posture. The surface 24a of the base portion 24 is provided with the recessed portion 40 which extends along the longitudinal direction (Y direction) of the end surfaces 20Aa and 20Ba.

Thus, when the electronic apparatus 10 is in the second posture, the end surfaces 20Aa and 20Ba of the left and right frame members 17A and 17B are in contact with or close to each other. In the display 16, the rear surface 16a thereof is supported by the surfaces 20Ab and 20Bb flat as a whole. Therefore, the electronic apparatus 10 can stably support the display 16. Further, the hinge 14 is located in the position where it is hidden by the frame members 17A and 17B. Therefore, the hinge 14 does not affect the bezel width around the display 16, and the quality of appearance of the electronic apparatus 10 can be ensured. Furthermore, the base portion 24 has the recessed portion 40. Therefore, when the hinge 14 is rotated, it can prevent the end surfaces 20Aa and 20Ba of the frame members 17A and 17B from interfering with the base portion 24, thereby allowing for smooth rotation.

It is preferable that in the second posture, the recessed portion 40 has the first region R1 located on the frame member 17A side of the boundary B and wider than the thickness t of the end surface 20Aa, and the second region R2 located on the frame member 17B side of the boundary B and wider than the thickness t of the end surface 20Ba. Thus, the hinge 14 can more reliably prevent the end surfaces 20Aa and 20Ba from interfering with the base portion 24 when the hinge 14 is rotated. The width W of each of the first and second regions R1 and R2 is wider than the thickness t of each of the end surfaces 20Aa and 20Ba. For example, in the first posture illustrated in FIG. 6, the end surfaces 20Aa and 20Ba can be reliably accommodated in the first and second regions R1 and R2 of the recessed portion 40, respectively. This allows the distance between the hinge 14 and the frame members 17A and 17B to be reduced. As a result, it is possible for the electronic apparatus 10 to ensure the smooth operation of the hinge 14 while making the chassis 12A and 12B as thin as possible.

The base portion 24 may have the ridge portion 24b protruding from the surface 24a to separate between the first and second regions R1 and R2. In this case, the recessed portion 40 may have a pair of recessed portions 40a and 40b by the first and second regions R1 and R2 being divided by the ridge portion 24b. That is, in the electronic apparatus 10, in order to make the chassis 12A and 12B thinner, the base portion 24 also needs to be reduced in thickness. Therefore, it is preferable for the electronic apparatus 10 that the ridge portion 24b is provided on the thinned base portion 24 to form the recessed portions 40a and 40b. This allows the hinge 14 to suppress interference with the frame members 17A and 17B while ensuring high rigidity. Further, when the ridge portion 24b protrudes from the center of the recessed portion 40, the distance between the arcs of the guide surfaces 44A and 44B can be sufficiently secured. This makes it possible to ensure sliding distances of the guide portions 48A and 48B of the brackets 30A and 30B relative to the guide surfaces 44A and 44B. Thus, the rotation of each of the chassis 12A and 12B can be made more stable.

The hinge 14 may have the connecting member 50, the pair of cam portions 52a and 52b, the pair of receiving portions 53a and 53b, the pair of cam portions 54a and 54b which are formed laterally symmetric with respect to the cam portions 52a and 52b, and the pair of receiving portions 55a and 55b. This allows the hinge 14 to synchronize the rotations of the left and right chassis 12A and 12B. Moreover, the synchronous mechanism 32 uses the cam portions 52a, 52b, 54a, and 54b without using the gears. Therefore, the hinge 14 can make the synchronous mechanism 32 thinner than the configuration having the synchronous mechanism using the gears. This is because the cam mechanism does not have meshing teeth as compared to the gear mechanism, and the outer diameter can be reduced.

It should be noted that the present invention is not limited to the above-described embodiment, and can be freely modified within the scope not departing from the spirit of the present invention.

In the above, the electronic apparatus 10 which can be folded in two like a book has been exemplified. However, the present invention can be applied to various configurations other than a configuration in which chassis of the same shape are folded in two, such as a double-door configuration in which small chassis are foldably connected to the left and right edge portions of a large chassis, respectively, an S-shaped folding configuration in which chassis different in folding direction are connected to the left and right edge portions of a single chassis, respectively, and a J-shaped folding configuration in which a small chassis is foldably connected to one of the left and right edge portions of a large chassis, and the number of chassis to be connected may be four or more.

### Description of Symbols

10 electronic apparatus
12A first chassis
12B second chassis
14 hinge
16 display
17A, 17B frame member
20A, 20B plate portion
20Aa, 20Ba end surface
24 base portion
26A, 26B shaft
28A, 28B link member
40, 40a, 40b recessed portion
50 connecting member
52a, 52b, 54a, 54b cam portion
53a, 53b, 55a, 55b receiving portion
D1 first display portion
D2 second display portion
D3 bent region

## Claims

1. An electronic apparatus (10) comprising:
a first frame member (17A) comprising a flat first surface and a first end surface provided at one edge portion of the first surface;
a second frame member (17B) comprising a flat second surface and a second end surface provided at one edge portion of the second surface and adjacent to the first end surface;
a hinge (14) configured to connect the first frame member and the second frame member so as to be rotatable relatively between a first posture in which the first surface and the second surface are arranged in an overlapping direction, and a second posture in which the first end surface and the second end surface are in contact with or close to each other and the first surface and the second surface are arranged side by side; and
a display (16) comprising a bent region (D3) which is provided between the first surface and the second surface and bent as the first frame member and the second frame member rotate relative to each other,
wherein the hinge comprises a base portion (24) located on rear surface sides of the first frame member and the second frame member and arranged to straddle a boundary between the first end surface and the second end surface which are in contact with or close to each other in the second posture, and
wherein a surface of the base portion includes a recessed portion (40, 40a, 40b) extending along a longitudinal direction of each of the first end surface and the second end surface.

2. The electronic apparatus according to claim 1, wherein the recessed portion includes:
a first region (R1) located on the first frame member side of the boundary in the second posture and wider than a thickness of the first end surface, and
a second region (R2) located on the second frame member side of the boundary in the second posture and wider than a thickness of the second end surface.

3. The electronic apparatus according to claim 2, wherein the base portion comprises a ridge portion (24b) protruding from the surface of the base portion and arranged to separate the first region and the second region,
wherein the recessed portion includes
a first recessed portion (40a) formed by the first region, which extends in the longitudinal direction on the first frame member side of the ridge portion, and
a second recessed portion (40b) formed by the second region, which extends in the longitudinal direction on the second frame member side of the ridge portion and is aligned in parallel with the first recessed portion, the ridge portion interposed between the first recessed portion and the second recessed portion.

4. The electronic apparatus according to any one of claims 1 to 3, wherein the hinge further includes
a first shaft (26A) comprising an axial direction along the longitudinal direction and supported by the base portion on the rear surface side of the first frame member,
a second shaft (26B) comprising an axial direction along the longitudinal direction and supported by the base portion on the rear surface side of the second frame member,
a first link member (28A) comprising one end supported by the first shaft so as to be relatively rotatable, and the other end connected to the first frame member so as to be relatively rotatable, and
a second link member (28B) comprising one end supported by the second shaft so as to be relatively rotatable, and the other end connected to the second frame member so as to be relatively rotatable,
wherein the recessed portion is arranged between the first shaft and the second shaft.

5. The electronic apparatus according to claim 4, wherein the hinge further includes
a pair of first cam portions (52a, 52b) provided on an outer periphery of the first shaft, extending so as to be inclined in the axial direction along a circumferential direction of the first shaft, and arranged to straddle one end of the first link member between the first cam members,
a pair of second cam portions (54a, 54b) provided on the outer periphery of the first shaft, extending so as to be inclined in the axial direction along a circumferential direction of the second shaft, arranged to straddle one end of the second link member between the second cam portions, and comprising symmetrical shapes to the pair of first cam portions,
a pair of first receiving portions (53a, 53b) provided at one end of the first link member and slidable relative to the pair of first cam portions, respectively,
a pair of second receiving portions (55a, 55b) provided at one end of the second link member and slidable relative to the pair of second cam portions, respectively, and
a connecting member (50) which is provided so as to straddle the first link member and the second link member and is movable relative to each of the first shaft and the second shaft in the axial direction, and which comes into contact with the first link member and the second link member so as to be immovable relative to the first link member and the second link member in the axial direction,
wherein one end of the first link member is movable relative to the first shaft in the axial direction between the pair of first cam portions, and
wherein one end of the second link member is movable relative to the second shaft in the axial direction between the pair of second cam portions.

6. The electronic apparatus according to claim 3, wherein the hinge further includes
a first bracket (30A) fixed to the first frame member,
a second bracket (30B) fixed to the second frame member,
a first shaft (26A) comprising an axial direction along the longitudinal direction and supported by the base portion on the rear surface side of the first frame member,
a second shaft (26B) comprising an axial direction along the longitudinal direction and supported by the base portion on the rear surface side of the second frame member,
a first **link** member (28A) comprising one end which is supported by the first shaft so as to be relatively rotatable and the other end which is connected to the first bracket so as to be relatively rotatable, and
a second **link** member (28B) comprising one end which is supported by the second shaft so as to be relatively rotatable and the other end which is connected to the second bracket so as to be relatively rotatable,
wherein the base portion includes a first guide surface (44A) recessed **in** an arc shape, which crosses a part of the first recessed portion **in** the longitudinal direction, and a second guide surface (44B) recessed **in an** arc shape, which crosses a part of the second recessed portion **in** the longitudinal direction,
wherein the first bracket comprises a first guide portion (48A) configured to slide on the first guide surface, and
wherein the second bracket comprises a second guide portion (48B) configured to slide on the second guide surface.
